# EUROPEAN PATENT APPLICATION

(11) **EP 1 479 962 A1**
(43) Date of publication of application: **24.11.2004**
(21) Application number: 04012140.2
(22) Date of filing: 21.05.2004
(51) Int. Cl.: F16L 37/12, F16L 37/62

(54) **Quick coupling device**

(30) Priority: 22.05.2003 IT PS20030024
(71) Applicant: Multinu, Gabriella, 23900 Lecco (IT)
(72) Inventor: Multinu, Gabriella, 23900 Lecco (IT)
(74) Representative: Negrini, Elena

(57) **Abstract**

A quick coupling device for jointing a fitting (50), which is provided with at least a hollow seat (51) and a first seal surface (52), includes:
- internal tubular means (2) provided with at least a first abutment portion (5);
- a plurality of jaw means (3), sliding over the internal tubular means (2), each including at least a second abutment portion (6) and a hooking portion (4), fit to be inserted in the hollow seat (51).

The jaw means (3) are mobile between an external position (E) and an internal position (R), in a coupling condition (B) of device (1), in which the abutment portions (5, 6) mutually disengaged.

In an operating condition (A), in which the abutment portions (5, 6) are reciprocally engaged, the jaw means (3) are blocked in the external position (E) in order to abut on the hollow seat (51), thus removably jointing the device (1) to the fitting (50).

## Description

The present invention relates to couplings and connections for hydraulic and pneumatic pressurized circuits or systems and particularly it refers to a quick coupling device for female connection of elements such as for instance pipes, fittings or holes.

There are known quick coupling devices which allow to quickly connect female pipes and terminal fittings and in which expander elements, in the assemblage position, abut on the walls of the pipe or fitting, removably blocking the quick coupling to the device.

Some devices are provided with mobile abutments, which are expanded outward for instance by threaded elements, in such a way to abut on, in the operating condition, suitable seats or threads, which are carried out in the inner walls of connections or fittings to be coupled. The subsequent opposed inwards movement of said abutments allows to disengage and to disconnect the device from the pipe or fitting.

A drawback of said known coupling devices consists in that they are specifically designed and manufactured for the type of fitting or pipe or hole to which they must be coupled; consequently, for the quick connection of different fittings or pipes as many separate and respective couplings are necessary, with evident increase of costs both for installation and for warehouse management.

Other drawback consists in that said devices do not guarantee a safe and reliable connection in the case of circuits and ducts flowed by high operation pressure, with the risk of dangerous and unexpected uncouplings during the operation.

Further drawback of said device is their complexity and cost, due to the large number of components by which they are constituted.

An object of the present invention is to propose a quick coupling device that allows to connect in quick, simple and safe way a plurality of pipes, fittings or holes having different dimensions and different design of their jointing end portions, such as threaded nipples, flanged or conical fittings, rigid or flexible tubes.

Other object is to propose a quick coupling device capable to guarantee a firm and reliable connection even when used in circuits with high-pressured fluid.

Further object is to propose a solid and reliable device, constituted by a limited number of components, having an economical manufacturing and a quick assemblage.

The above-mentioned objects are achieved in accordance with the claim content.

The characteristics of the present invention are underlined in the following with particular reference to the attached drawings, in which:
- figure 1 shows a half section of the quick coupling device of the present invention in association with female fitting to be coupled, in an operating condition of device;
- figure 2 shows a plan view of the device of figure 1;
- figures 3 and 4 show half sections of device of figure 1 in a coupling condition, in which blocking means are respectively in an external position and in an internal position for the insertion into the fitting;
- figure 5 shows an enlarged half section of device of figure 1, in which some parts have been removed for better underlining the others;
- figure 6 shows a sectional view according to line VI-VI of figure 5;
- figure 7 shows a partial side view of the device of figure 5;
- figure 8 shows a half section of a variant of the device of figure 1;
- figure 9 shows a half section of a further variant of the device of figure 1 in a operating condition;
- figure 10 shows a front view of the variant of figure 9 in a coupling condition;
- figure 11 shows a sectional view of another variant of device of figure 1;
- figure 12 shows a sectional view according to line XII-XII of figure 11;
- figure 13 shows a partial half section of a further variant of device of figure 11 in association with a fitting.

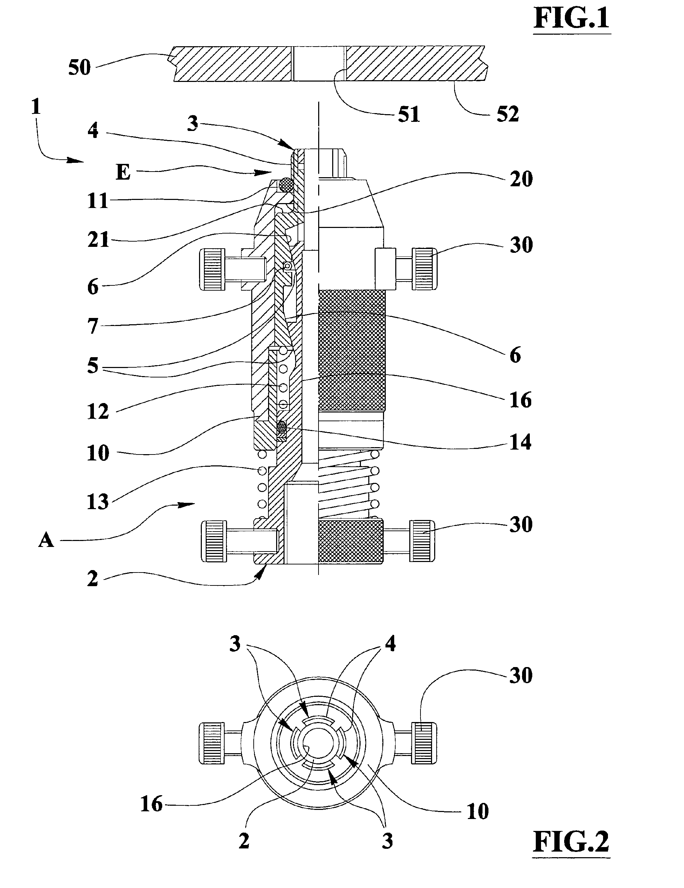

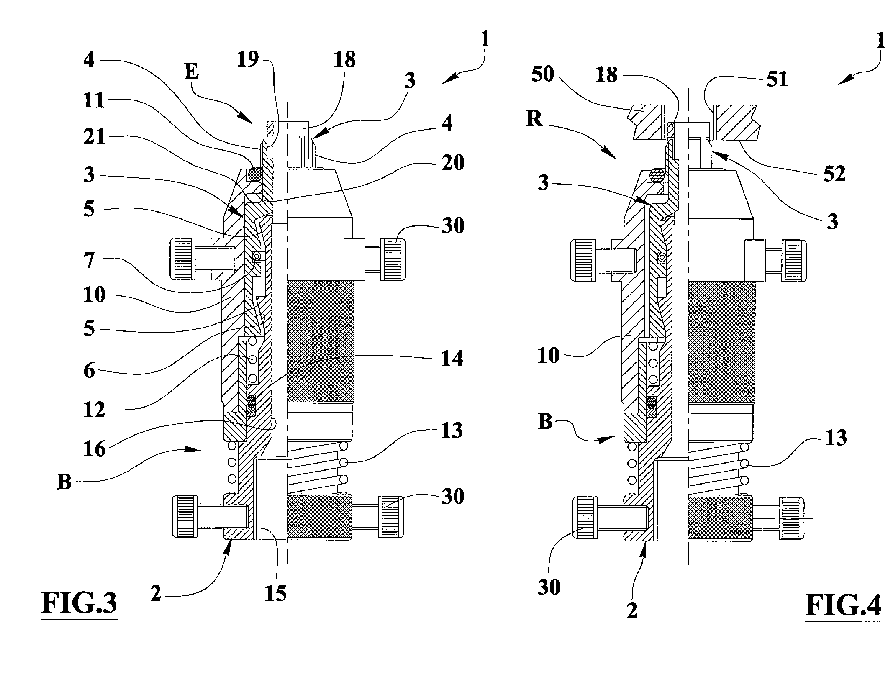

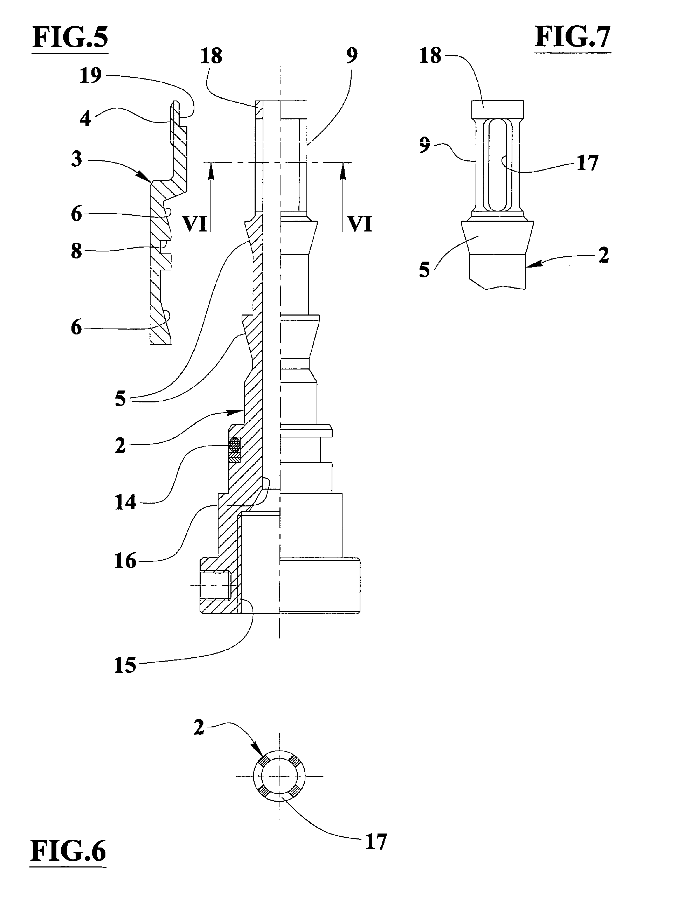

With reference to figures 1 to 7, numeral 1 points out the quick coupling device of the present invention for the connection to a fitting 50, provide with a hollow seat 51 and a first seal surface 52.

The device 1 is substantially constituted by internal tubular means 2, a plurality of jaw means 3 and external tubular means 10, which are coaxial and axially mobile the one inside the other. Particularly, the internal tubular means 2 support the jaw means 3, between two and six in number, preferably four, positioned facing each other and angularly spaced apart, each thereof has a hooking portion 4, fit to be inserted in the hollow seat 51 of fitting 50. The jaw means 3 supports the external tubular mean 10.

The internal tubular means 2 may coaxially slide inside the jaw means 3 and inside the external tubular means 10 and they have a couple of first abutment portions 5, consisting of corresponding annular conical protrusions. In an operating condition A of device 1, said abutment portions 5 abut on respective couples of second abutment portions 6 of each jaw means 3, consisting of protruding conical sectors or inclined planes.

The jaw means 3 are elastically mobile between two positions, external E and internal R, in a coupling condition B of device 1, in which the abutment portions 5, 6 are mutually disengaged.

In the operating condition A the abutment portions 5, 6 mate each other and the jaw means 3 are stopped in their external position E. The jaw means 3 can radially move with respect to the axis of the internal tubular means 2 and they are reciprocally interconnected by first elastic means 7, thrusting in external direction to elastically restrain said jaw means 3 in the external position E. The first elastic means 7 consist of a circular spring of toroidal type, acting in compression, or they consist of an "O-ring" gasket and they are housed in a seat 8, carried out in each of the jaw means 3.

The hooking portion 4 of each jaw means 3 has annulus sector shape and has an external surface with a shape approximately complementary to the walls of seat 51, for instance threaded or provided with projections and grooves.

The external tubular means 10, axially sliding on the internal tubular means 2, are provided with first seal means 11 which are housed in an appropriate annular seat and which are fit to abut on the first seal surface 52 in the operating condition A of device 1, in order to guarantee a watertight connection. The first seal means 11 in the preferred embodiment circumferentially contact the jaw means 3.

Second elastic means 12, interposed between the internal tubular means 2 and the jaw means 3, act in axial direction in order to maintain in contact the abutment portions 5, 6 and consequently to restrain the jaw means 3 in the external position E.

Third elastic means 13, positioned between the external tubular means 10 and the internal tubular means 2, contribute to maintain the first seal means 11 in contact with the first seal surface 52 in the operating condition A. A helical spring acting in compression preferably constitutes each of the second elastic means 12 and third elastic means 13.

There are further provided second seal means 14, for instance consisting of an annular gasket made of elastomer material, of so-called "O-ring" type, which assure a watertight connection between the external tubular means 10 and the internal tubular means 2.

The internal tubular means 2 include a coaxial duct 16 and a connection 15, respectively fit for the passage of pressurized fluid and for the coupling with an external pipe or hose.

In the preferred embodiment, the internal tubular means 2 include end portion 9, fixed at the end opposed to the connection 15 and provided with a plurality of through openings 17 in flow communication with the duct 16 and in number equal to that of jaw means 3. Each through opening 17 is, in fact, fit for partially housing an end or the hooking portion 4 of respective jaw means 3 in the internal condition R.

The end portion 9, which is preferably manufactured integral with the internal tubular means 2, includes an annular neck 18 which abuts on a housing 19 of each blocking means 3 in the operating condition A of device 1. Said contact avoids that the bending of hooking portions 4 of jaw means 3 can cause the disengagement of seat 51 and the consequent undesirable and dangerous disconnection of device 1, especially when flowed by high pressure fluids.

The external tubular means 10 internally include an annular surface 20, which is subjected to the pressure of the fluid coming from the duct 16 of tubular means 2 through the through openings 17. The fluid exerts thus a force, which is proportional to the operation pressure and retain the external tubular means 10 against the first seal surface 52 of fitting 50. The fluid pressure also acts on a shoulder 21 of each jaw means 3 in such a way to maintain the second abutment portions 6 against the first abutment portions 5 in the external position E.

There are provided grip means 30, for instance knurled screw, fixed to the tubular means external 10 and internal 2 in opposed positions, to facilitate the manual use of device in the coupling and uncoupling operations.

The operation of the quick coupling device 1 provides that by the relative sliding of internal tubular means 2 with respect to the external tubular means 10 in a coupling condition B of device 1, the abutment portions first 5 and second 6, respectively of the internal tubular means 2 and of the jaw means 3, are disengaged so causing the unlocking thereof from the external position E, in which they are hold only by means of the elastic thrust of the first elastic means 7. The jaw means 3 are consequently free to radially slide with respect to the longitudinal axis of internal tubular means 2, the one toward the other, in such a way to allow inserting the respective hooking portions 4 inside the seat 51. The subsequent contact of hooking portions 4 with the walls of seat 51 causes the coupling of device 1 to the fitting 50. Particularly, the elastic connection among the jaw means 3 allows the hooking portions 4 thereof to progressively abut on possible internal protrusions or thread peaks, which are in hollow seat 51. In this way, when the first seal means 11 abut on the first seal surface 52, the jaw means 3 are already firmly engaged to the walls of seat 51.

The release of internal tubular means 2 cause, by virtue of thrust of the elastic means second 12 and third 13 the contact of the abutment portions first 5 and second 6 and the consequent blocking of jaw means 3 in the external position E, so assuring the stability and firmness of linkage between the fitting 50 and device 1.

The linkage stability is also guaranteed by an annular surface 20 of the external tubular means 10 and by shoulders 21 of jaw means 3, on which the pressurized fluid acts, thus exerting opposed forces aimed to maintain, contemporarily, the abutment portions 5 and 6 to mutual contact and the first seal means 11 compressed against the first seal surface 52. The thrust on the jaw means 3 and on the external tubular means 10 is directly proportional to the fluid operation pressure. Said solution is particularly advantageous in the case of operation with high-pressure fluid, over 300 bar.

It is important to emphasize that by virtue of the design and operation of jaw means 3 and of the position and shape of seal means 11 as well, it is possible to joint the device 1 to fittings 50 having hollow seats 51 with dimensions ranging inside predefined intervals and with walls of different typologies, for instance smooth or threaded or conical.

To guarantee an optimal clamping of jaw means 3 to fitting 50 it is also possible quickly and effortless to assemble or to replace the jaw means 3, having hooking means 4, which are suitably designed and shaped in accordance with the walls of hollow seat 51.

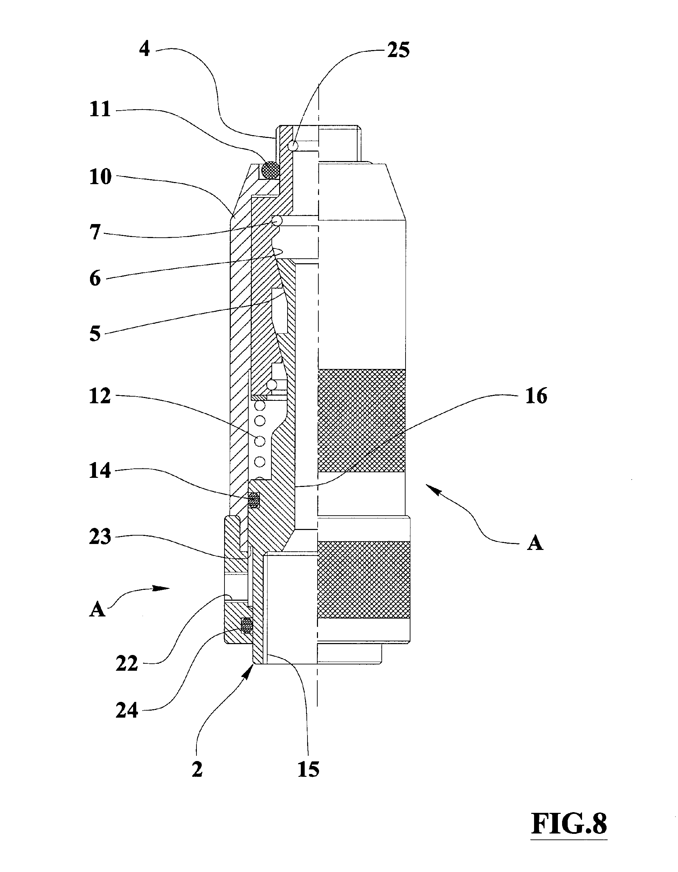

The figure 8 shows a variant of quick coupling device 1, particularly fit to be used in circuits with pressures lower than 300 bar and in which the internal tubular means 2 are unprovided with the end portion 9, in order to guarantee the maximum passage section for the fluid, at the hooking portions 4, in the operating condition A. Said variant allows a larger inexpensiveness in the manufacturing and it is particularly efficient in case of small dimensions fittings 50, in which the passage section in presence of end portion 9 could be too small.

In said variant the jaw means 3 are interconnected at the hooking portions 4 by fourth elastic means 25, acting in external direction to elastically maintain the jaw means 3 in the external position E, in association with the first elastic means 7. The fourth elastic means 25 are also constituted by a circular spring acting in compression or by an O-ring gasket.

Furthermore, said variant is arranged for a pneumatic type drive. The external tubular means 10 has a hole 22 to allow the admission of pressurized fluid, typically compressed air, which acting on a thrust surface 23 of internal tubular means 2, pushes the latter towards the fitting 50, so allowing the commutation of device 1 from the operating condition A to the coupling condition B. Completed the admission of compressed air, the second elastic means 12 bring in the initial position the internal tubular means 2 and, as a result, the device 1 moves from the coupling condition B to the operating condition A.

Fourth seal means 24 are provided for assuring the watertight connection between the internal tubular means 2 and the external tubular means 10.

Said variant is particularly advantageous when the quick coupling device has to be moved by industrial manipulator or robots in high automation factory.

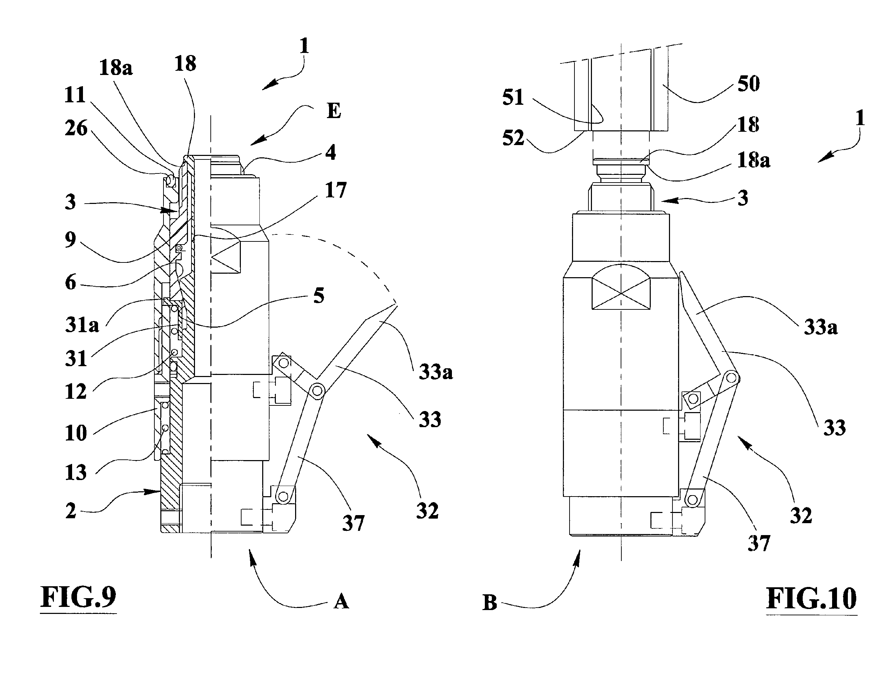

In the variant shown in figures 9 and 10, the end portion 9 of the internal tubular means 2 include a annular neck 18 with an annular shaped seat 18a fit to accommodate the external end of the hooking portion 4 of each jaw means 3 in the operational condition A of device 1. Particularly with high-pressure fluid, i.e. over 400 bar, said contact avoids the bending and/or the breaking of hooking portions 4 of jaw means 3 and the following dangerous and undesired disengagement thereof from seat 51. This design allow to reduce the wall thickness of the jaw means 3 and of the end portion 9, widening the cross section of the coaxial duct 16 for increasing the fluid or gas flow rate. In particularly, each jaw means 3 is unprovided with the housing 19 for accommodating the annular neck 18 of the end portion 9. The opening 17 consist of a single through bore in flow communication with the duct 16.

The external tubular means 10 are provided an annular groove 26, which fully accommodates the first seal means 11, so avoiding the contact thereof with the hooking portions 4 of jaw means 3. In this way the jaw means 3 can have a longer stroke, in the passage from the operating condition A and the coupling condition B. The longer stroke allows to pre-load more the third elastic means 13, so obtaining a stronger thrust of in the operation condition A.

The internal tubular means 2 have one first abutment portion 5 fit to abut on a respective second abutment portion 6 of each jaw means 3.

The variant of device 1 further includes a flanged tubular element 31 sliding over the internal tubular means 2 and interposed between the jaw means 3 and the second elastic means 12. Said flanged tubular element 31 has an annular projecting rim 31a, which abuts on the inner end of each jaw means 3 in the operational position A.

The annular projecting rim 31a acts as longitudinal and transversal catch for the jaw means 3 assuring in the operating condition A both the alignment of jaw means 3 and their transversal locking even with very high-pressure fluids. This transversal restraint avoids the bending of the inner ends of jaws means 3 which can cause the breaking thereof and/or the disengagement of abutment portions 5, 6 and thus the uncoupling of device 1 from fitting 50. At the same time said transversal restraint allows the jaws means 3 easily sliding over the inner wall of external tubular means 10, avoiding friction and consequent jamming or blocking thereof.

The whole design of this variant further allows an easier and quicker assemblage of the device 1. The jaw means 3, which are assembled and mutually positioned by virtue of annular shaped seat 18a and of annular projecting rim 31a, can be easily inserted, together with the inner tubular means 2, inside the external tubular means 10.

The variant also includes lever means 32 hinged to the internal tubular means 2 and to the external tubular means 10 and fit to move said means each to other, from the operating condition A to the coupling condition B of device 1 and vice versa. By way of example, the lever means can comprise an "L" shaped lever 36, which is hinged at the inner end of its short leg to the external tubular means 10 and at its right-angled bend to a connecting rod 37, whose remaining end is rotatably coupled to the internal tubular means 2.

By manually acting on a pushing portion 33a of the L" shaped lever 36 and moving the latter towards the external tubular means 10, it is possible to move the device 1 from the operating condition A to the coupling condition B.

It should be noted that the lever means 32 allows both using the device 1 with one hand only and reducing the efforts to operate it.

By releasing the "L" shaped lever 36 the device 1 returns in the operating condition A.

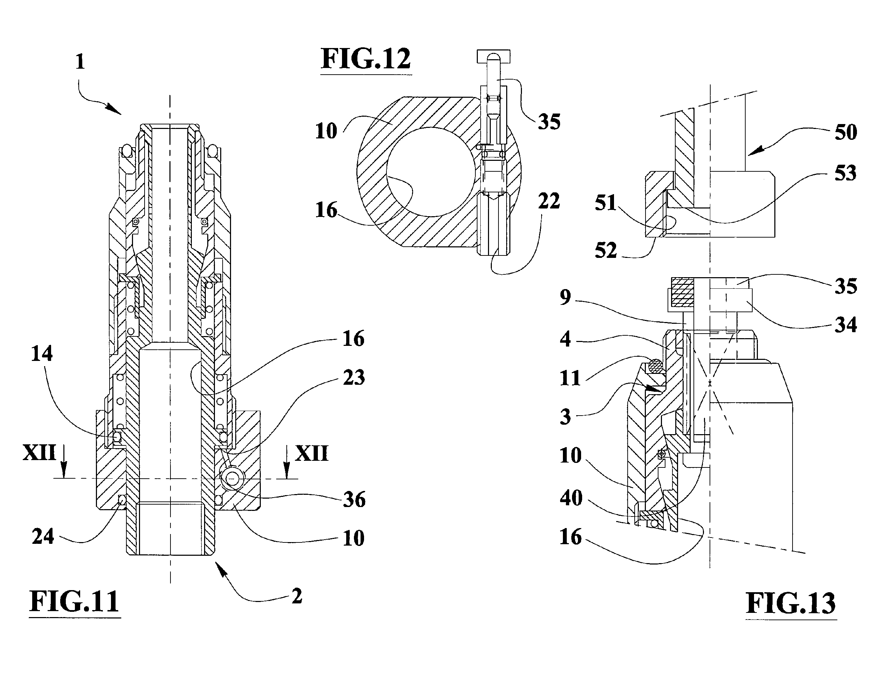

Figure 11 and 12 show a further variant of the quick coupling device of the present invention which includes a manually operated inlet valve 35, of know type, for opening and closing the flow connection between the hole 22 of the pressurized fluid admission an the thrust surface 23 of the internal tubular means 2, through a inner channel 36. The inlet valve 35 includes a push button. By pushing and releasing the latter the operator can respectively move without effort the device 1 from the operating condition A to the coupling condition B and vice versa. The inlet valve 35 can be both monostable and bistable.

In the variant of figure 13 the end portion 9 includes a cylindrical protrusion 34 provided with third seal means 35 fit to abut on a second seal surface 53 of a double seal fitting 50, for instance equipping special pipes or connections. The third seal means 35 cooperate with the first seal means 11, which at the same time abut on first seal surface 52. A one-way check valve 40 can be inserted in the inner tubular means 2 for avoiding backflow from fitting 50.

It is important to underline that design and manufacturing of quick coupling device 1 of the present invention in the preferred embodiment and variants thereof, guarantees large flow rates of fluid and, at the same time, minimal flow resistance.

An advantage of the present invention is to provide a quick coupling device that allows to connect in quick, simple and safe way a plurality of pipes, fittings or holes having different dimensions and different design of their jointing end portions, such as threaded nipples, flanged or conical fittings, rigid or flexible tubes.

Other advantage is to provide a quick coupling device capable to guarantee a firm and reliable joint even when used in circuits with high-pressure fluid.

Further advantage is to provide a solid and reliable device, constituted by a limited number of components, having an economical manufacturing and a quick assemblage.

## Claims

1. Quick coupling device for jointing a fitting (50), which is provided with at least a hollow seat (51) and a first seal surface (52), said device (1) being **characterized in that** it includes:
- internal tubular means (2) provided with at least a first abutment portion (5);
- a plurality of jaw means (3), sliding over the internal tubular means (2), each including at least a second abutment portion (6) and a hooking portion (4), fit to be inserted in the hollow seat (51);
the jaw means (3) are mobile between an external position (E) and an internal position (R), in a coupling condition (B) of device (1), in which the abutment portions (5, 6) are mutually disengaged; in a operating condition (A), in which the abutment portions (5, 6) are mutually engaged, the jaw means (3) are blocked in the external position (E) in order to abut on the hollow seat (51), thus removably jointing the device (1) to the fitting (50).

2. Device according to claim 1 **characterized in that** the jaw means (3) are radially sliding with respect to the axis of internal tubular means (2) and they are interconnected at least by first elastic means (7), acting in external direction to elastically restrain said jaw means (3) in the external position (E).

3. Device according to claim 1 **characterized in that** it includes external tubular means (10), which are axially mobile on the internal tubular means (2) and provided with first seal means (11) for a watertight abutment of the first seal surface (52) in the operating condition (A) of device (1).

4. Device according to claim 1 **characterized in that** it includes second elastic means (12), which are interposed between the internal tubular means (2) and the abutment means (3) and which axially thrust to restrain in contact the abutment portions (5, 6) in the external position (E) of said abutment means (3).

5. Device according to claim 3 **characterized in that** it includes third elastic means (13), which are interpose between the external tubular means (10) and the internal tubular means (2) and which are fit to maintain the first seal means (11) against the first seal surface (52) in the operating condition (A).

6. Device according to claims 4 and 5 **characterized in that** the second elastic means (12) and third elastic means (13) include each at least a helical spring acting in compression.

7. Device according to claim 1 **characterized in that** the at least first abutment portion (5) of internal tubular means (2) includes an annular conic protrusion; the at least second abutment portion (6) of each jaw means (3) includes a protruding conic sector.

8. Device according to claim 1 **characterized in that** the hooking portion (4) of each jaw means (3) has annulus sector shape and has an external surface with a shape approximately complementary to the walls of seat (51).

9. Device according to claim 2 **characterized in that** each jaw means (3) has at least a seat (8) fit for housing the first elastic means (7).

10. Device according to claim 2 **characterized in that** the first elastic means (7) consist of a circular spring or an O-ring gasket.

11. Device according to claim 3 **characterized in that** it includes second seal means (14) for the watertight connection between the external tubular means (10) and the internal tubular means (2).

12. Device according to claims 11 **characterized in that** the second seal means (14) consist of an annular gasket made of elastomer material, of "O-ring" type.

13. Device according to claim 1 **characterized in that** the internal tubular means (2) include a coaxial duct (16) and a connection (15) respectively fit for the passage of pressurized fluid and for the joint with a pipe.

14. Device according to claim 13 **characterized in that** the internal tubular means (2) includes a end portion (9) fixed at the opposite end with respect to the connection (15) and provided with at least an through opening (17) in flow communication with the duct (16).

15. Device according to claim 14 **characterized in that** the end portion (9) includes one trough opening (17) for each jaw means (3), each through opening (17) being fit to house, at least partially, an end of respective jaw means (3), at least in the internal condition (R).

16. Device according to claim 14 **characterized in that** the end portion (9) has an annular neck (18) fit to abut on a housing (19) provided in each jaw means (3), in the operational condition (A) of device (1).

17. Device according to claim 3 **characterized in that** the external tubular means (10) internally include at least an annular surface (20).

18. Device according to claim 3 **characterized in that** it includes grip means (30) fixed to the tubular means, external (10) and internal (2), for holding the device (1).

19. Device according to the claim 3 **characterized in that** the external tubular means (10) have at least a hole (22) for the admission of pressurized fluid fit to move the internal tubular means (2), acting on a thrust surface (23) thereof, for the passage from the operating condition (A) to the coupling condition (B) of device (1).

20. Device according to claim 14 **characterized in that** the end portion (9) include an annular neck (18) with an annular shaped seat (18a) fit to accommodate the external end of hooking portion (4) of each jaw means (3) in the operational condition (A) of device (1).

21. Device according to claim 4 **characterized in that** it includes a flanged tubular element (31) sliding over the internal tubular means (2) and interposed between the jaw means (3) and the second elastic means (12); said flanged tubular element (31) being provided with an annular projecting rim (31a) which abuts on the inner end of each jaw means (3) in the operational position (A).

22. Device according to claim 1 **characterized in that** it includes lever means (32) hinged to the internal tubular means (2) and to the external tubular means (10) and fit to move said means each to other, from the operating condition (A) to the coupling condition (B) of device (1), by acting on a pushing portion (33a) of said lever means (32).

23. Device according to claim 1 **characterized in that** the end portion (9) include a cylindrical protrusion (34) provided with third seal means (35) fit to abut on a second seal surface (53) of a double seal fitting (50).

24. Device according to claim 1 **characterized in that** it includes a manually operated inlet valve (35) for opening and closing the flow connection between the hole (22) of the pressurized fluid admission an the thrust surface (23) of the internal tubular means (2).
